**Europäisches Patentamt**

**European Patent Office**

**Office européen des brevets**

(19)

(11) Veröffentlichungsnummer: **0 083 296**
**B1**

(12)

# EUROPÄISCHE PATENTSCHRIFT

(45) Veröffentlichungstag der Patentschrift:
**19.11.87**

(21) Anmeldenummer: **82710059.5**

(22) Anmeldetag: **16.12.82**

(51) Int. Cl.⁴: **G 01 L 5/16,** G 01 L 1/16,
G 01 M 9/00

(54) **Heckstielwaage zur Luftkraftbestimmung an Windkanalmodellen.**

(30) Priorität: **28.12.81 DE 3151669**

(43) Veröffentlichungstag der Anmeldung:
**06.07.83 Patentblatt 83/27**

(45) Bekanntmachung des Hinweises auf die Patenterteilung:
**19.11.87 Patentblatt 87/47**

(84) Benannte Vertragsstaaten:
**CH FR GB LI NL SE**

(56) Entgegenhaltungen:
**CH - A - 472 668**
**CH - A - 502 590**
**US - A - 3 306 101**

(73) Patentinhaber: **Deutsche Forschungs- und
Versuchsanstalt für Luft- und Raumfahrt e.V., Linder
Höhe Postfach 90 60 58, D-5000 Köln 90 (DE)**

(72) Erfinder: **Pszolla, Hartmut, Dipl.-Ing., Am Goldgraben 7,
D-3400 Göttingen (DE)**

(74) Vertreter: **Patentanwälte Dipl.-Ing. Rudolf Bibrach
Dipl.-Ing. Elmar Rehberg, Pütterweg 6 Postfach 738,
D-3400 Göttingen (DE)**

**Beschreibung**

Die Erfindung bezieht sich auf eine Heckstielwaage zum Messen mehrerer Komponenten des flugmechanischen Achsensystems zur Luftkraftbestimmung an Windkanalmodellen, mit einem zwischen Modell und Auflagerung eingeschalteten Waagekörper, an dem Messaufnehmer angeordnet sind, deren jeweils abgegebenes elektrisches Signal ein Mass für die jeweilige Komponente ist (siehe US-A-3 306 101).

Modelle von Flugkörpern, Flugzeugen und Landfahrzeugen werden bekanntlich in Windkanälen untersucht, wobei durch den Windkanal ein gleichmässiger Luftstrom erzeugt wird, der auf das Modell einwirkt. Zu diesem Zweck ist das Modell in einer Messstrecke des Windkanals angeordnet. Die häufigste Befestigungsart des Modells besteht aus einem als Heckstiel bezeichneten Rundstab, der durch das Heck des Modells eingeführt und im Rumpf des Modells festgeklemmt wird, so dass das Modell von ihm getragen ist. Am anderen Ende wird der Heckstiel in einem Lager aufgenommen, mit dem zugleich die Anstellung des Modells gegenüber der Strömung verändert werden kann.

Das wesentliche Ziel von Modellversuchen in Windkanälen ist die Ermittlung der infolge der Umströmung auftretenden resultierenden Luftkraft und des Luftkraftmoments. Entsprechend den drei Hauptachsrichtungen eines Flugzeugs lassen sich die Luftkraft und das Luftkraftmoment entsprechend dem flugmechanischen Achsensystem in drei senkrecht zueinander stehende Kraftkomponenten und drei Momentenkomponenten um diese Achsen zerlegen. Die Ermittlung der Luftkraftkomponenten geschieht mit einer Heckstielwaage.

Die US-A-3 306 101 zeigt eine Heckstielwaage zum Messen mehrerer Komponenten des flugmechanischen Achsensystems zur Luftkraftbestimmung an Windkanalmodellen mit einem Waagekörper, der aus Gründen der erleichterten Herstellung aus drei Teilen zusammengesetzt ist, wobei die Zusammensetzung der drei Teile so erfolgt, dass ein einziger zusammenhängender Körper gebildet ist, der ohne die Verwendung von Bolzen oder Schrauben auskommt, um Hysterese und Nullpunktsdrift zu vermeiden. Dieser Waagekörper ist nun an verschiedenen Stellen in der Materialstärke besonders dünnwandig, also flexibel ausgebildet, wobei solche flexible Stellen des Waagekörpers mit Dehnungsmessstreifen belegt sind. Mit einer solchen Heckstielwaage soll es möglich sein, alle sechs Komponenten des flugmechanischen Achsensystems zugleich messen zu können. Im Ausführungsbeispiel wird jedoch nur aufgezeigt, wie drei Komponenten, nämlich der Widerstand (Axialkraft), der Auftrieb (Normalkraft) und das Nickmoment gemessen werden können. Dabei ist eine H-förmige Konfiguration des mittleren Teils des Waagekörpers so ausgebildet, dass hier die Widerstandsmessung erfolgt, während die Messung des Auftriebs und des Nickmoments auf den beiden übrigen Teilen des Waagekörpers erfolgen. Es wird also immer auf dem Waagekörper bzw. auf Teilen des Waagekörpers gemessen, niemals zwischen den Teilen des Waagekörpers. Die eingesetzten Dehnungsstreifen sind inaktive Messaufnehmer, die bekanntlich an eine Speisespannung angelegt werden müssen. Die entstehenden und abnehmbaren Spannungen stehen in einem annähernd linearen Zusammenhang zu den Luftkräften bzw. Luftkraftmomenten. Mit den bekannten Heckstielwaagen erzielt man brauchbare Messergebnisse in stationären Strömungen bei konstanten bzw. gering schwankenden Messtemperaturen. Diese Waagen eignen sich besonders für statische Langzeitversuche. Mit Dehnungsmessstreifen arbeitende Heckstielwaagen verfügen jedoch, bedingt durch das Tangentialkraftelement, nur über eine geringe Steifigkeit. Dies führt oft bei Messungen im hohen Anstellwinkelbereich zur Anfachung des Systems aus Modell und Waage. Die Folgen sind falsche Messergebnisse bzw. Zerstörung der Waage. Für dynamische Messungen und Messungen in instationären Strömungen sind die bekannten Waagen nur bedingt einsatzfähig. Ferner können lokale Temperaturgradienten erhebliche Messfehler verursachen.

Aus der CH-A-472 668 ist ein kompakter Messaufnehmer in Form eines piezoelektrischen Mehrkomponentenkraftaufnehmers bekannt, bei dem Scheiben aus in verschiedenen Richtungen geschnittenen Kristallen hintereinander axial aufgereiht angeordnet und in einem Gehäuse vorgespannt gelagert sind. Diese Scheiben sind teilweise druckempfindlich, teilweise schubempfindlich. Eine solche Messzelle mit den verschiedenen Scheiben gestattet die Messung von drei Kraftkomponenten in den drei Raumrichtungen. Wie die CH-A-472 668 an dem Ausführungsbeispiel der Figur 5 zeigt, können mehrere Kraftaufnehmer axial hintereinander und in Verbindung mit einem Dreikomponentenaufnehmer auf einer Stange angeordnet werden, um somit eine Messanordnung zu schaffen, mit der drei Kräfte und ein Moment gemessen werden können. Bei einer solchen Anordnung entsteht ein mehr oder weniger fester, vergleichsweise wenig deformierbarer Waagekörper, in den die Scheiben eingebaut sind. Auch bei dieser Anordnung ist es nicht möglich, das Rollmoment zu messen, da die grundsätzliche Anordnung nur die Messung in Ebenen zulässt, und zwar in solchen Ebenen, die die Längsachse der Anordnung schneiden. Das Rollmoment ist als eine Verdrehung um die Längsachse definiert.

Der Erfindung liegt die Aufgabe zugrunde, eine Heckstielwaage der eingangs beschriebenen Art zu schaffen, die die Nachteile der bekannten Waagen nicht mehr aufweist und insbesondere für dynamische und quasi-stationäre Messbedingungen einsetzbar ist. Auch bei instationären Strömungen soll die Heckstielwaage einsetzbar sein. Die Heckstielwaage soll weit weniger empfindlich gegen anfachende Kräfte und gegen Zerstörung sein und sich ausserdem bei Hoch-, Umgebungs- und Kryotemperaturen gleichermassen einsetzen lassen.

Erfindungsgemäss wird dies dadurch erreicht, dass der Waagekörper in einen Aktionsbalken und einen Reaktionsbalken unterteilt ist, dass als Messaufnehmer mindestens zwei piezoelektrische Kraftaufnehmer zwischen den beiden Balken an unterschiedlichen Orten vorgesehen sind, wobei zwei Kraftaufnehmer seitlich versetzt zueinander angeordnet sind, und dass die Kraftaufnehmer zur Abgabe von mindestens sechs Signalen für die sechs Komponenten des flugmechanischen Achsensystems ausgebildet sind. Die Erfindung benutzt damit als Messaufnehmer grundsätzlich nicht mehr inaktive Dehnungsmessstreifen, sondern aktive piezoelektrische Komponentenaufnehmer. Dabei wird die aus der CH-A-472 668 bekannte Tatsache ausgenutzt, dass bei gewissen piezoelektrischen Kraftaufnehmern, wenn sie aus in verschiedenen Richtungen geschnittenen Kristallscheiben zusammengesetzt und in bestimmten Richtungen gedrückt oder auf Schub belastet werden, an ihren Oberflächen freie Ladungen entsprechend den Richtungen auftreten, die verstärkt und damit gemessen werden können. Dieser Effekt ist reproduzierbar. Die Ladungen sind proportional zum ausgeübten Schub oder Druck. Die Gestaltung von solchen Mehrkomponentenaufnehmern, also von einem Aufnehmer, der geeignet ist, Komponenten verschiedener Richtungen aufzunehmen und anzuzeigen, ist möglich, weil entsprechend geschnittene und angeordnete Kristalle schubempfindlich sind. Werden Scheiben aus einem Quarzkristall z.B. senkrecht zur X-Achse geschnitten, so sind sie auf in X-Richtung wirkende Kräfte empfindlich. Werden Scheiben senkrecht zur Y-Achse aus einem Quarzkristall geschnitten, so sind sie schubempfindlich. Dabei kann der Vorteil ausgenutzt werden, dass der Waagekörper nicht mehr deformierbar weich ausgebildet sein muss, sondern vorteilhaft eine hohe Steifigkeit besitzen kann, so dass hieraus eine hohe Eigenfrequenz des Systems aus Modell und Waage resultiert, die bestens geeignet ist, die entstehenden Kräfte auch bei grossen Anstellwinkeln aufzunehmen und zu messen, ohne dass die Gefahr der Beschädigung der Waage entsteht. Die piezoelektrischen Kraftaufnehmer können als Einkomponentenaufnehmer ausgebildet sein. Besonders vorteilhaft ist es jedoch, wenn die piezoelektrischen Kraftaufnehmer als Mehrkomponentenaufnehmer, insbesondere als Dreikomponentenaufnehmer, ausgebildet sind, die in der Waage so angeordnet sind, dass alle sechs Freiheitsgrade der X-, Y- und Z-Achse gefesselt sind.

Die die piezoelektrischen Kraftaufnehmer zwischen sich aufnehmenden Balken des Waagekörpers können ein Profil hoher Steifigkeit darstellen, damit die Eigenfrequenz der Waage möglichst hoch wird. Die zulässigen Verformungen an dem Waagekörper gehen damit gegen Null.

Die beiden Balken des Waagekörpers sind vorteilhaft über Dehnschrauben miteinander verbunden, so dass es möglich ist, auf die Kraftaufnehmer eine Vorspannung aufzubringen. Durch Verlagerung des Nullpunkts ist es auf diese Art und Weise möglich, auch die Richtung der Kräfte in einer Achse, also deren positives oder negatives Vorzeichen, zu messen.

In einer bevorzugten Ausführungsform sind drei Dreikomponentenaufnehmer zwischen den beiden Balken des Waagekörpers vorgesehen, von denen zwei fluchtend zu der Achse des Waagekörpers und einer seitlich versetzt davon angeordnet sind. Die Anordnung der Dreikomponentenaufnehmer basiert damit auf dem Prinzip der Drei-Punkt-Auflage. Durch eine entsprechende Schaltung der einzelnen abgreifbaren Signale der Dreikomponentenaufnehmer entsteht eine lineare Umwandlung der sechs Komponenten der Luftkräfte in eine Kraft bzw. momentenproportionale elektrische Ladung. Die Balken des Waagekörpers können U-förmigen Querschnitt aufweisen, um grösstmögliche Steifheit zu erzielen und trotzdem kompakt zu bauen.

Weitere Vorteile der neuen Heckstielwaage sind darin zu sehen, dass die Verwendung der Waage z.B. in flüssigem Stickstoff bei ca. −190 °C. keine neue Eichung der Waage erfordert. Es genügt die einmalige Eichung der Waage bei Raumtemperatur. Weiterhin besitzt die Heckstielwaage eine sehr geringe Ansprechschwelle, eine hohe Empfindlichkeit und eine hohe Steifigkeit, so dass damit ein Messbereich ausgemessen werden kann, für den man bisher drei verschiedene herkömmliche Waagen benötigte.

Ein Ausführungsbeispiel der Erfindung ist in der Zeichnung dargestellt und wird im folgenden näher beschrieben. Es zeigen:

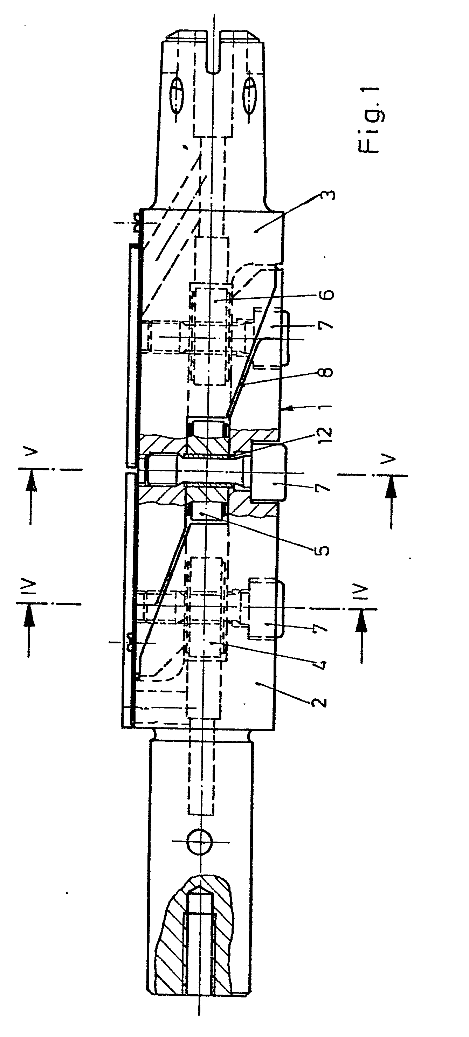

Fig. 1 eine Seitenansicht der Heckstielwaage in zusammengebautem Zustand,

Fig. 2 eine Draufsicht auf die Heckstielwaage gemäss Fig. 1,

Fig. 3 eine Draufsicht auf den Aktionsbalken der Heckstielwaage gemäss Fig. 1 und 2,

Fig. 4 einen Schnitt gemäss der Linie IV–IV in Fig 1,

Fig. 5 einen Schnitt gemäss der Linie V–V in Fig. 1 und

Fig. 6 eine schematische Darstellung der Heckstielwaage in einem Flugzeug.

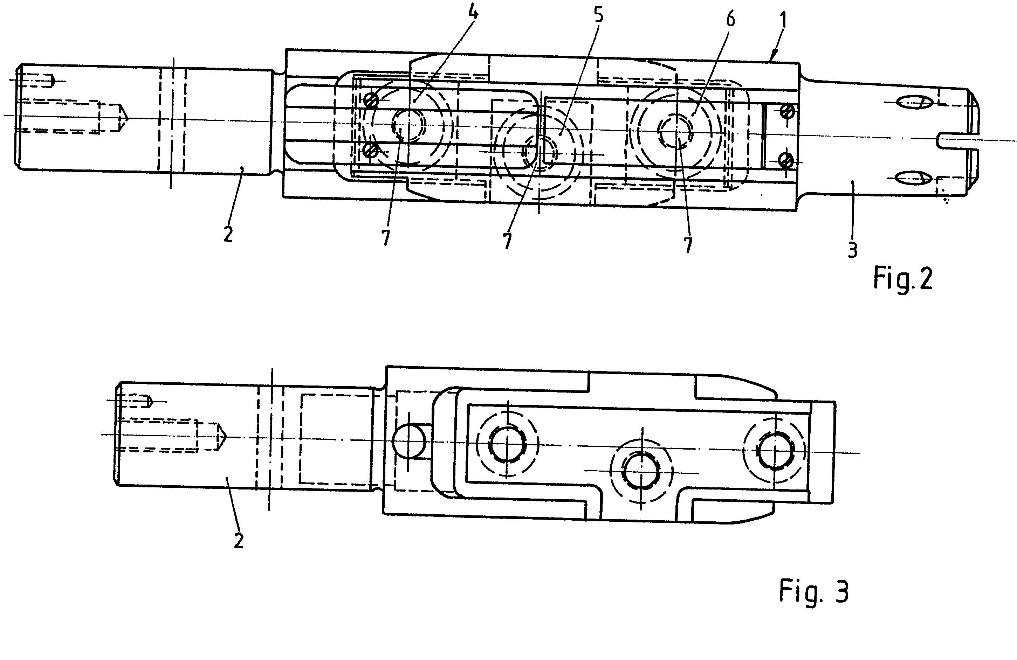

Die in den Figuren dargestellte Heckstielwaage besitzt einen Waagekörper 1, der im wesentlichen aus einem Aktionsbalken 2 und einem Reaktionsbalken 3 zusammengesetzt ist. Die beiden Balken sind grundsätzlich ähnlich ausgebildet und nehmen zwischen sich drei Dreikomponentenaufnehmer 4, 5, 6 auf, die in einer Ebene angeordnet sind, wobei die Dreikomponentenaufnehmer 4 und 6 mit der Achse der Waage zusammenfallen, während der Dreikomponentenaufnehmer 5 seitlich versetzt dazu angeordnet (s. Fig. 2, 3 und 5). Die Dreikomponentenaufnehmer 4, 5, 6 sind quadratisch ausgebildet und mit Hilfe je einer Dehnschraube 7 und einer Zentrierhülse 12 zwischen den beiden Balken 2 und 3 gelagert, wobei sie diese beiden Balken damit auch miteinander verbinden. Jeder der Dreikomponentenaufnehmer besitzt je drei abnehmbare Signale entsprechend dem flugmechanischen Achsensystem X, Y, Z. Derartige Dreikomponentenaufnehmer 4, 5, 6 sind käuflich erhältlich. Zwischen den beiden Balken 2 und 3 befindet sich ansonsten ein durchgehender Schlitz 8. Der Aktionsbalken 2 wie auch der Reaktionsbalken 3 sind im Bereich des Dreikomponentenaufnehmers 4 bzw. 6 mit U-förmigem Querschnitt gestaltet, wie dies am besten aus Fig. 3 entnehmbar ist, so dass hier mit möglichst grosser Steifheit konstruiert ist, um die Eigenfrequenz hoch anzusetzen. Die übrigen Bohrungen, Löcher, Absätze und sonstige Gestaltungen an den beiden Balken 2 und 3 sind von untergeordneter Bedeutung. Sie dienen einmal dazu, den Aktionsbalken 2 mit dem Modell zu verbinden bzw. dazu, den Reaktionsbalken mit dem Auflager, dem sogenannten Schwert, zu kuppeln. Andererseits sind Durchbrechungen vorgesehen, um elektrische Leitungen durch die Waage hindurchzuziehen, die der Abnahme der Signale an den Dreikomponentenaufnehmern 4, 5, 6 dienen.

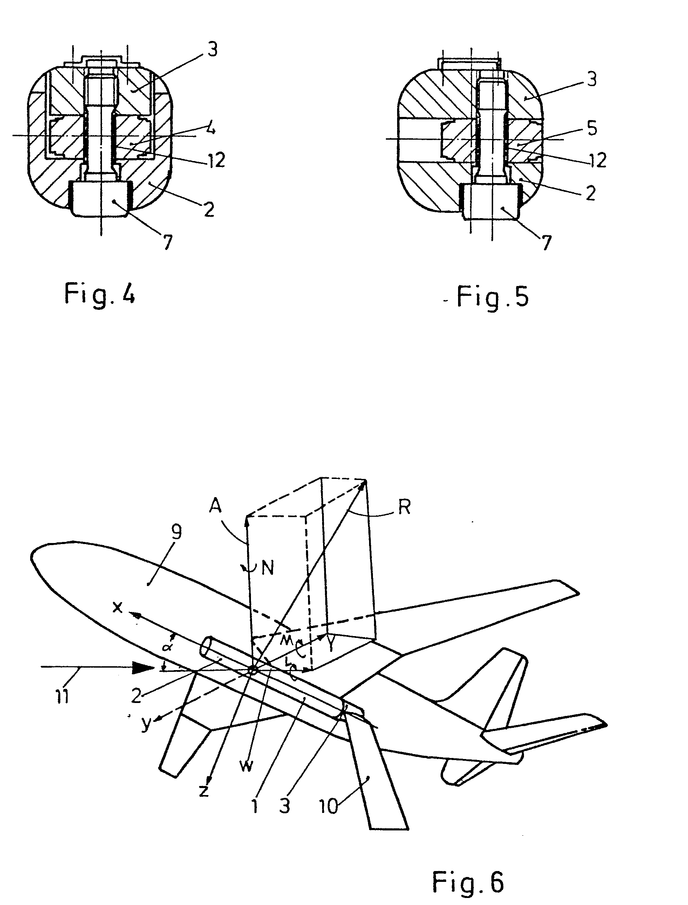

Fig. 6 zeigt den Waagekörper 1 eingebaut in einem Flugzeugmodell 9. Der hintere Teil des Waagekörpers 1, also der Reaktionsbalken 3 ist einem sogenannten Schwert 10 aufgelagert. In dem dargestellten Bezugspunkt im Bereich des Waagekörpers ist das flugmechanische Achsensystem x, y, z eingezeichnet. Es ist ersichtlich, wie das Flugzeugmodell 9 entsprechend dem Pfeil 11 angeströmt wird, wobei es selbst im Winkel $\alpha$ gegenüber der X-Richtung angestellt ist. Die mit Hilfe der Heckstielwaage durchzuführende Messung dient letztlich dazu, die Luftkraft R zu ermitteln, die sich aus dem Auftrieb A, dem Widerstand W und der Seitenkraft Y ergibt. Ausserdem sind zur Verdeutlichung das Kipp- oder Nickmoment M, das Giermoment N und das Rollmoment L angedeutet. Es sei festgesetzt, dass der Dreikomponentenaufnehmer 4 die Signale $x_1$, $z_1$ und $y_1$ abgibt. Von dem Dreikomponentenaufnehmer 5 kommen die Signale $y_2$, $z_2$ und $x_2$. Von dem Dreikomponentenaufnehmer 6 werden die Signale $x_3$, $z_3$ und $y_3$ geliefert. Für die Komponenten des resultierenden Kraftvektors F ergibt sich:

$$Fx = Fy_1 + Fx_2 + Fy_3$$
$$Fy = - Fx_1 + Fy_2 + Fx_3$$
$$Fz = Fz_1 + Fz_2 - Fz_3$$

und für die Komponenten des resultierenden Momentenvektors

$$M = A (Fz_1 - Fz_2)$$
$$N = A (Fx_1 - Fx_3) + B Fx_2$$
$$L = B (-Z_2)$$

Dabei ist der geometrische Abstand A die Entfernung zwischen dem Dreikomponentenaufnehmer 4 und dem Dreikomponentenaufnehmer 5 in X-Richtung. Diese Entfernung ist gleich dem Abstand zwischen den beiden Dreikomponentenaufnehmern 5 und 6 in X-Richtung. Der Abstand B entspricht der seitlichen Versetzung des Dreikomponentenaufnehmers 5 gegenüber der Verbindungslinie der beiden Dreikomponentenaufnehmer 4 und 6. Die von der Heckstielwaage abgegebenen Signale werden entsprechend verstärkt und in üblicher Art und Weise ausgewertet.

### Patentansprüche

1. Heckstielwaage zum Messen mehrerer Komponenten des flugmechanischen Achsensystems zur Luftkraftbestimmung an Windkanalmodellen, mit einem zwischen Modell und Auflagerung eingeschalteten Waagekörper (1), an dem Messaufnehmer angeordnet sind, deren jeweils abgegebenes elektrisches Signal ein Mass für die jeweilige Komponente ist, dadurch gekennzeichnet, dass der Waagekörper (1) in einen Aktionsbalken (2) und einen Reaktionsbalken (3) unterteilt ist, dass als Messaufnehmer mindestens zwei piezoelektrische Kraftaufnehmer zwischen den beiden Balken (2, 3) an unterschiedlichen Orten vorgesehen sind, wobei zwei Kraftaufnehmer seitlich versetzt zueinander angeordnet sind, und dass die Kraftaufnehmer zur Abgabe von mindestens sechs Signalen für die sechs Komponenten des flugmechanischen Achsensystems ausgebildet sind.

2. Heckstielwaage nach Anspruch 1, dadurch gekennzeichnet, dass die piezoelektrischen Kraftaufnehmer als Mehrkomponentenaufnehmer, insbesondere Dreikomponentenaufnehmer (4, 5, 6) ausgebildet sind.

3. Heckstielwaage nach Anspruch 1 oder 2, dadurch gekennzeichnet, dass die die piezoelektrischen Kraftaufnehmer zwischen sich aufnehmenden Balken (2, 3) des Waagekörpers (1) ein Profil hoher Steifigkeit darstellen.

4. Heckstielwaage nach Anspruch 3, dadurch gekennzeichnet, dass die beiden Balken (2, 3) des Waagekörpers (1) über Dehnschrauben (7) miteinander verbunden sind.

5. Heckstielwaage nach einem der Ansprüche 1 bis 4, dadurch gekennzeichnet, dass drei Dreikomponentenaufnehmer (4, 5, 6) zwischen den beiden Balken (2, 3) des Waagekörpers vorgesehen sind, von denen zwei (4, 6) fluchtend zu der Achse des Waagekörpers und einer (5) seitlich versetzt dazu angeordnet sind.

6. Heckstielwaage nach Anspruch 5, dadurch gekennzeichnet, dass die beiden Balken (2, 3) des Waagekörpers (1) U-förmigen Querschnitt aufweisen.

### Claims

1. Tail sting balance for measuring a plurality of aerodynamic force and couple components that are referred to the aeromechanical system of axes, these measurements being made in order to determine the aerodynamic forces acting on wind tunnel models, this tail sting balance possessing a balance body (1) which is interposed between the model and the supporting member, and on which body (1) measuring sensors are installed, each emitting an electrical signal that represents a real-time measurement of the component in question, characterized in that the balance body (1) is subdivided in a manner such that it comprises an action beam (2) and a reaction beam (3), in that two or more piezoelectric force transducers are provided between the two beams (2, 3), at different locations, these force transducers serving as measuring sensors and two of them being installed at locations such that they are laterally echeloned, and in that the force transducers are configured for the purpose of emitting at least six signals, representing the six force and couple components that are referred to the aeromechanical system of axes.

2. Tail sting balance according to Claim 1, characterized in that the piezoelectric force transducers are configured as multi-component transducers, and especially as three-component transducers (4, 5, 6).

3. Tail sting balance according to Claim 1 or 2, characterized in that the piezoelectric force transducers are accommodated between the beams (2, 3) which form the balance body (1) and constitute a cross-section that exhibits a high degree of stiffness.

4. Tail sting balance according to Claim 3, characterized in that the two beams (2, 3) forming the balance body (1) are interconnected by screws (7) that exhibit resilience by virtue of their shape.

5. Tail sting balance according to one of Claims 1 to 4, characterized in that three three-component transducers (4, 5, 6) are installed between the two balance-body beams (2, 3), two of these transducers (4, 6) being aligned on the axis of the balance body, while one transducer (5) is installed at a location that is laterally offset therefrom.

6. Tail sting balance according to Claim 5, characterized in that the two beams (2, 3) forming the balance body (1) exhibit a U-shaped cross-section.

**Revendications**

1. Balance de queue destinée à la mesure de plusieurs composantes du système d'axes de la mécanique de vol en vue de la détermination de la force aérodynamique dans des modèles pour soufflerie aérodynamique, comportant un corps de balance (1) disposé entre le modèle et un support, sur lequel sont disposés des capteurs de mesures dont le signal qu'ils délivrent dans chaque cas est une mesure de la composante considérée, caractérisée par le fait que le corps de balance (1) se divise en une barre d'action (2) et une barre de réaction (3), que, en tant que capteurs, on prévoit au moins deux capteurs de force piézo-électriques à des endroits différents entre les deux barres (2, 3), ces deux capteurs de force étant décalés l'un par rapport à l'autre, et en ce que les capteurs de force sont constitués de façon à délivrer au moins six signaux pour les six composantes du système d'axes de la mécanique de vol.

2. Balance de queue selon la revendication 1, caractérisée par le fait que les capteurs de force piézo-électrique sont constitués par des capteurs à plusieurs composantes, en particulier par des capteurs (4, 5, 6) à trois composantes.

3. Balance de queue selon la revendication 1 ou 2, caractérisée par le fait que les barres (2, 3) du corps de balance (1) qui reçoivent entre elles les capteurs de force piézo-électriques, présentent un profil de grande rigidité.

4. Balance de queue selon la revendication 3, caractérisée par le fait que les deux barres (2, 3) du corps de balance (1) sont reliées entre elles par des vis à expansion.

5. Balance de queue selon une des revendications 1 à 4, caractérisée par le fait que trois capteurs à trois composantes (4, 5, 6) sont prévus entre les deux barres (2, 3) du corps de balance, et que deux d'entre eux (4, 6) sont disposés affleurant l'axe du corps de balance et un (5) est disposé avec un décalage par rapport à ce dernier.

6. Balance de queue selon la revendication 5, caractérisée par le fait que les deux barres (2, 3) du corps de balance (1) présentent une section en forme de U.

Fig.1

Fig.2

Fig. 3

9

Fig. 4

- Fig. 5

Fig. 6